# EUROPÄISCHE PATENTSCHRIFT

(11) **EP 3 743 639 B1**
(45) Veröffentlichungstag und Bekanntmachung des Hinweises auf die Patenterteilung: **01.05.2024**
(21) Anmeldenummer: 18830159.2
(22) Anmeldetag: 11.12.2018
(51) Int. Cl.: F16F 15/14, F16D 21/06, B60K 6/20, B60K 6/48, F16D 25/10, F16D 25/0638

(54) **TILGERANORDNUNG, DOPPELKUPPLUNGSGETRIEBEANORDNUNG SOWIE KRAFTFAHRZEUG**
VIBRATION ABSORBER, DOUBLE CLUTCH GEARBOX AND VEHICLE
AMORTISSEUR D'OSCILLATIONS, BOÎTE DE VITESSES À DOUBLE EMBRAYAGE ET VÉHICULE

(30) Priorität: 23.01.2018 DE 102018201005
(43) Veröffentlichungstag der Anmeldung: 02.12.2020
(73) Patentinhaber: ZF Friedrichshafen AG, 88046 Friedrichshafen (DE)
(72) Erfinder: MATSCHAS, Steffen, 97708 Bad Bocklet (DE); KNAUS, Nikolaj, 97424 Schweinfurt (DE); KRAM, Matthias, 97080 Würzburg (DE)
(86) Internationale Anmeldenummer: PCT/EP2018/084286
(87) Internationale Veröffentlichungsnummer: WO 2019/145083

(56) Entgegenhaltungen:
- EP-A1- 3 026 296
- WO-A1-2015/149790
- DE-A1-102009 059 944
- DE-A1-102015 203 289
- DE-A1-102015 215 897
- DE-A1-102015 226 303
- DE-A1-102016 205 419
- DE-A1-102016 212 975

## Beschreibung

Die Erfindung betrifft eine Tilgeranordnung für einen Kraftfahrzeugantriebsstrang mit einem Tilger und einem Antriebsstrangelement, wobei der Tilger wenigstens zwei Tilgerträger aufweist und wobei der Tilger an dem Antriebsstrangelement befestigt ist.

Tilger sind bekannte Bauteile, um Schwingungen im Antriebsstrang zu dämpfen oder zu entfernen. Diese sind mit einem grundsätzlich beliebigen Element des Antriebsstrangs verbunden. Sobald das Antriebsstrangelement aufgrund von Schwingungen in Bewegung gerät wird diese Bewegung auf den Tilger übertragen. Aufgrund seiner Konstruktion dämpft der Tilger diese Schwingungen. Dabei sind verschiedene Tilgertypen bekannt. Beispielsweise gibt es Festfrequenztilger oder drehzahladaptive Tilger. Tilger weisen so zu sagen als Skelett Tilgerträger auf. Diese werden auch Bahnbleche genannt.

Üblicherweise wird der Tilger am Antriebsstrangelement befestigt, indem die Tilgerträger mit dem Antriebsstrangelement vernietet werden.

Beispiele aus dem Stand der Technik hierzu sind EP 3 026 296 A1, DE 10 2016 212975 A1, DE 10 2015 226303 A1, DE 10 2015 203289 A1, WO 2015/149790 A1, DE 10 2009 059944 A1 oder DE 10 2015 215897 A1.

Dabei kann das Problem auftreten, dass bei der Qualitätsprüfung die Ausschussrate höher als gewünscht ist. Auch können Probleme im Betrieb auftreten.

Zur Lösung dieses Problems wird bei einer Tilgeranordnung der eingangs genannten Art vorgeschlagen, dass genau ein Tilgerträger des Tilgers an dem Antriebsstrangelement festgelegt ist.

Es hat sich überraschenderweise herausgestellt, dass nicht die Abstimmung der Tilger problematisch ist, sondern die Befestigung am Antriebsstrangelement. Die Tilgerträger sind nämlich bei einer seitlichen Anordnung der Tilgerträger über Abstandselement miteinander verbunden. Werden nun beide Tilgerträger am Antriebsstrangelement befestigt, beispielsweise bei der Vernietung, kommt es zu einer Überbestimmung. Dies führt zu Verzügen und damit zu Funktionsproblemen. Diese Funktionsprobleme werden dadurch vermieden, dass nicht mehr zwei oder mehrere Tilgerträger mit dem Antriebsstrangelement verbunden werden, sondern lediglich einer.

Verbunden werden meint dabei, dass der Tilgerträger in Bezug auf das Antriebsstrangelement festgelegt ist. Die Festlegung kann dabei in axialer Richtung, in radialer Richtung oder in beiden Richtungen vorliegen.

Vorzugsweise weist der Tilger genau zwei Tilgerträger auf. Diese sind bevorzugt axial außen und die Tilgermasse oder die Tilgermassen innen angeordnet.

Vorteilhafterweise kann wenigstens einer der Tilgerträger in radialer Richtung auf Höhe der Befestigungsstelle freigestellt sein. Insbesondere kann genau ein Tilgerträger freigestellt sein. Geht man von zwei Tilgerträgern aus ist also einer am Antriebsstrangelement festgelegt und der andere nicht. Die Nichtfestlegung kann beispielsweise dadurch erzielt werden, dass der Tilgerträger freigestellt ist. Dann kann das Befestigungselement zum Befestigen des Tilgers am Antriebsstrangelement auch durch diesen Tilgerträger durchgreifen.

In einer ersten Ausgestaltung kann der Tilgerträger auf der Seite des Antriebsstrangelementes freigestellt sein. Dann greift das Befestigungsmittel oder Befestigungselement durch diesen Tilgerträger hindurch.

Alternativ kann aber auch der Tilgerträger auf der zum Antriebsstrangelement abgewandten Seite freigestellt sein. Dann kann diese Freistellung in Form einer Durchgangsausnehmung dazu dienen, ein Werkzeug durch den freigestellten Tilgerträger durchzuführen, um die Befestigung des Tilgers am Antriebsstrangelement zu ermöglichen.

Vorzugsweise kann der Tilger an dem Antriebsstrangelement lösbar befestigt sein. Beispielsweise kann der Tilger an dem Antriebsstrangelement verschraubt sein. Dies kann, wie sich aus den beschriebenen Ausgestaltungen bereits ergibt, durch eine Verschraubung genau eines Tilgerträgers am Antriebsstrangelement geschehen. Unter Verschraubung wird dabei die Festlegung verstanden. Greift die Schraube nämlich durch den freigestellten Tilgerträger hindurch, so ist dieser im herkömmlichen Sinne mit verschraubt. Jedoch ist er durch die Schraube nicht festgelegt. Es sei darauf hingewiesen, dass sowohl der Tilgerträger auf der Seite des Antriebsstrangelements als auch der auf der Antriebsstrangelement abgewandten Seite festgelegt sein kann, jedoch immer nur einer von beiden.

Üblicherweise ist bei Verwendung einer Schraube auf Seiten des Antriebstrangelementes eine Durchgangsausnehmung vorgesehen, durch die das Gewinde der Schraube durchgeführt wird. Dann liegt die Unterseite des Schraubenkopfes am Antriebstrangelement an.

Alternativ kann der Schraubkopf der Schraube der Schraubverbindung mit der Oberseite an dem Antriebsstrangelement befestigt sein. Erfindungsgemäß wird genau ein Tilgerträger mit dem Antriebsstrangelement verschraubt. Erfindungsgemäß wird der Schraubkopf am Antriebsstrangelement verschweißt oder vernietet.

Vorteilhafterweise kann zwischen dem Tilgerträger ein Abstandselement die Befestigungsvorrichtung, insbesondere die Schraube, umgreifen. Die Tilgerträger sind bei einer seitlichen Anordnung in Umfangsrichtung an mehreren Stellen durch Abstandsbolzen miteinander befestigt. Das Abstandselement dient jedoch zur Herstellung eines definierten Abstandes entweder zwischen den beiden Tilgerträgern oder zwischen einem der Tilgerträger und dem Schraubkopf oder dem Antriebsstrangelement.

Vorzugsweise kann das Antriebsstrangelement als Gehäuse ausgebildet sein. Die Bezeichnung Gehäuse ist hier funktional zu verstehen, das Gehäuse kann beispielsweise Teil einer Kupplung sein und auch nur einen Teil des Gesamtgehäuses ausmachen. Das Antriebsstrangelement soll also als Gehäuse oder Gehäuseabschnitt dienen. Neben der weiter unten im Detail beschriebenen Gestaltung als Gehäuseabschnitt einer Dreifachkupplungsanordnung kann das Antriebsstrangelement selbstverständlich auch in allen weiteren bekannten und möglichen Ausgestaltungen auftreten. Beispielsweise kann der Tilger selbstverständlich auch am Gehäuse einer Druckplattenbaugruppe einer trockenen Reibungskupplung befestigt sein.

Vorzugsweise kann das Antriebsstrangelement zumindest zeitweise in den Drehmomentfluss eingebunden sein. So können Schwingungen am wirkungsvollsten aus dem Antriebsstrang entfernt werden.

Vorzugsweise kann das Antriebsstrangelement als Lamellenträger, insbesondere als Außenlamellenträger, einer Lamellenkupplungsanordnung ausgebildet sein. Es kann dabei gleichzeitig einen Gehäuseabschnitt oder das Gehäuse der Lamellenkupplungsanordnung bilden. Der Lamellenträger kann vorteilhafterweise ein ausgangsseitiger Lamellenträger sein, es kann aber auch ein eingangsseitiger Lamellenträger sein. Vorzugsweise kann die Lamellenkupplungsanordnung als Dreifachkupplungsanordnung ausgebildet sein.

Vorteilhafterweise kann die Lamellenkupplungsanordnung wenigstens zwei Lamellenkupplungen aufweisen, wobei die Lamellenkupplungen jeweils einen Außenlamellenträger umfassen und die Außenlamellenträger das Gehäuse der Lamellenkupplungsanordnung bilden. Insbesondere kann die Lamellenkupplungsanordnung genau drei Lamellenkupplungen aufweisen, wobei die drei Außenlamellenträger das Gehäuse der Lamellenkupplungsanordnung bilden. Es gibt dementsprechend keine weiteren Gehäuseteile. Hierdurch lässt sich in axialer Richtung Bauraum einsparen.

Vorzugsweise kann die Lamellenkupplungsanordnung wenigstens zwei Lamellenkupplungen aufweisen, wobei der Tilger seitlich an einem Übergang der Außenlamellenträger oder zweier Gehäuseabschnitte angeordnet ist. Die lösbare Anordnung des Tilgers ermöglicht dabei insbesondere einen Zugang zu diesem Übergang, so dass der Übergang für Montagezwecke zugänglich bleibt.

Vorzugsweise kann eine der Lamellenkupplungen als Anfahrkupplung ausgebildet sein. Weiterhin kann eine der Lamellenkupplungen als Trennkupplung ausgebildet sein. Vorzugsweise ist der Tilger an der Trennkupplung angeordnet. Bei einer Trennkupplung liegt nämlich der Fall vor, dass dieser weitestgehend schlupffrei betrieben wird, weswegen eine Anordnung des Tilgers auch am Ausgangslamellenträger unproblematisch ist.

Vorzugsweise kann die Lamellenkupplungsanordnung eine Dreifachkupplungsanordnung sein. Diese beinhaltet neben der Trennkupplung und der Anfahrkupplung eine zweite Lastschaltkupplung.

Daneben betrifft die Erfindung eine Hybrid-Doppelkupplungsgetriebeanordnung mit einer Kupplungsanordnung. Die Hybrid-Doppelkupplungsgetriebeanordnung zeichnet sich dadurch aus, dass die Kupplungsanordnung wie beschrieben ausgebildet ist.

Daneben betrifft die Erfindung ein Kraftfahrzeug mit einer Kupplungsanordnung und/oder einer Doppelkupplungsgetriebeanordnung. Das Kraftfahrzeug zeichnet sich dadurch aus, dass die Kupplungsanordnung und/oder die Doppelkupplungsgetriebeanordnung wie beschrieben ausgebildet ist.

Weitere Vorteile, Merkmale und Einzelheiten der Erfindung ergeben sich aus der folgenden Beschreibung von Ausführungsbeispielen und Figuren. Dabei zeigen:
- Fig. 1: ein Kraftfahrzeug,
- Fig. 2: eine Kupplungsanordnung mit einer Tilgeranordnung,
- Fig. 3: eine Schraubverbindung in einer Ausgestaltung im Querschnitt,
- Fig. 4: die Schraubverbindung in einer ersten Ausgestaltung in der Draufsicht,
- Fig. 5: eine Schraubverbindung in einer zweiten Ausgestaltung im Querschnitt,
- Fig. 6: die Schraubverbindung einer zweiten Ausgestaltung in einer Draufsicht,
- Fig. 7: eine Schraubverbindung in einer dritten Ausgestaltung im Querschnitt,
- Fig. 8: die Schraubverbindung in der dritten Ausgestaltung in der Draufsicht,
- Fig. 9: eine Schraubverbindung in einer vierten Ausgestaltung im Querschnitt,
- Fig. 10: die Schraubverbindung in der vierten Ausgestaltung in Draufsicht,
- Fig. 11: eine Schraubverbindung in einer fünften Ausgestaltung im Querschnitt, und
- Fig. 12: die Schraubverbindung in der fünften Ausgestaltung in der Draufsicht.

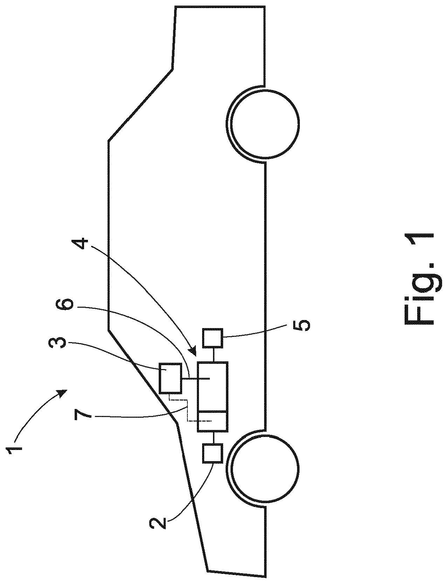

Figur 1 zeigt ein Kraftfahrzeug 1 mit einer ersten Antriebseinheit 2, einer zweiten Antriebseinheit 3, einer Doppelkupplungsgetriebeanordnung 4 und einem Differential 5. Die erste Antriebseinheit umfasst vorzugsweise eine Verbrennungskraftmaschine. Die zweite Antriebseinheit 3, insbesondere in Form eines Elektromotors ausgeschaltet, kann dabei entweder wie durch die Linie 6 oder die gestrichelt dargestellte Linie 7 angedeutet am Antriebsstrang angreifen. Ein Zusammenwirken mit einer oder beiden Getriebeeingangswellen wird dabei als P2-Anordnung bezeichnet und ein Zusammenwirken mit dem Getriebe selbst als P3-Anordnung. Daneben sind auch eine P1- und eine P4- Anordnung bekannt. Diese stellen die grundsätzlichen Varianten einer parallelen Anordnung von erster Antriebseinheit 2 und zweiter Antriebseinheit 3 dar. Im Folgenden wird eine Kupplungsanordnung für eine P2-Anordnung beschrieben.

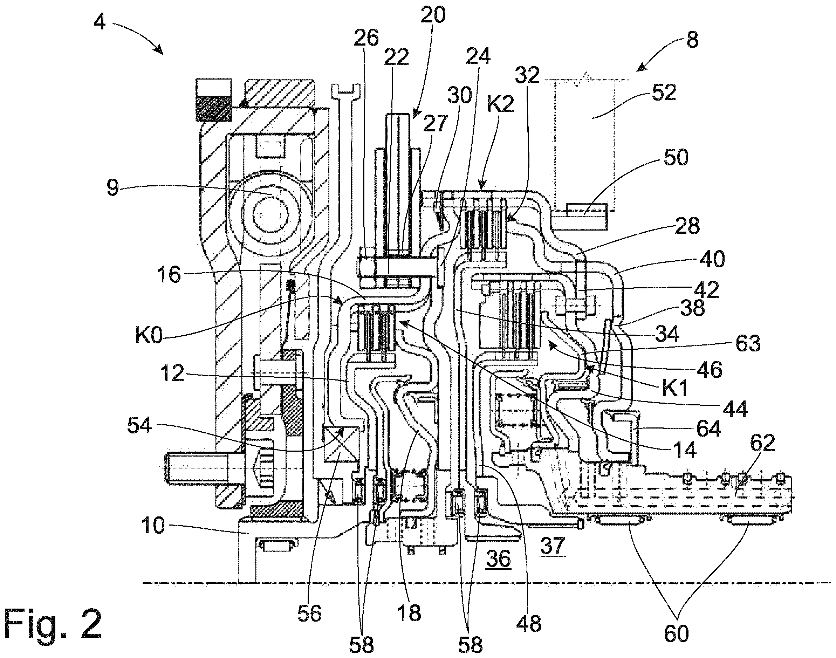

Figur 2 zeigt eine Kupplungsanordnung 8 als Teil der Doppelkupplungsgetriebeanordnung 4. Die Doppelkupplungsgetriebeanordnung 4 ist hybridisiert, weswegen das Drehmoment über zwei Wege zum Getriebe gelangen kann. Der erste Weg führt von der ersten Antriebseinheit 2 über einen Torsionsdämpfer zur Dämpfung von Torsiosschwingungen, insbesondere ein Zweimassenschwungrad 9, und eine Nabe 10 zur Trennkupplung K0. Mit der Nabe 10 ist dabei der Eingangslamellenträger der Trennkupplung K0, nämlich der Innenlamellenträger 12, drehfest verbunden. Über das Lamellenpaket 14 kann das Drehmoment auf den Außenlamellenträger 16 übertragen werden. Zur Betätigung der Trennkupplung K0 ist ein Kolben 18 vorhanden.

Ausgangsseitig der Trennkupplung K0, nämlich am Ausgangslamellenträger, in diesem Fall dem Außenlamellenträger 16, ist ein drehzahladaptiver Tilger 20 befestigt. Der drehzahladaptiver Tilger 20 ist mit dem Außenlamellenträger 16 lösbar verbunden. Zusammen mit dem Außenlamellenträger 16 bildet der Tilger 20 eine Tilgeranordnung 21. Beispielsweise kann der Tilger 20 mit dem Außenlamellenträger 16 mittels einer Schraube 22 verschraubt sein. Dabei befindet sich der Schraubenkopf 24 innerhalb der Kupplungsanordnung 8, während die Mutter 26 außerhalb angeordnet ist. Zwischen Tilger 20 und Schraube 26 befindet sich noch eine Hülse 27. Diese dient bei geschlossenem Schraubverband der axialen Beabstandung der Bahnbleche des Tilgers 20.

Diese mögliche Ausgestaltung der Tilgeranordnung 21 birgt allerdings wie eingangs bereits erwähnt Probleme. Bei grundsätzlich gleichem Aufbau der Doppelkupplungsgetriebeanordnung 4 und der Kupplungsanordnung 8 als Lamellenkupplungsanordnung kann daher die Ausgestaltung der Anbindung des Tilgers 20 an den Außenlamellenträger 16 als Antriebsstrangelement geändert werden. Die weiter unten gezeigten Ausgestaltungen der Tilgeranordnung 21 können also in der Doppelkupplungsgetriebeanordnung nach Figur 2 verwendet werden.

Mit dem Außenlamellenträger 16 ist der Außenlamellenträger 28 drehfest verbunden. Beispielsweise können der Außenlamellenträger 16 und der Außenlamellenträger 28 formschlüssig verbunden sein. Zur axialen Sicherung des Außenlamellenträgers 16 gegenüber dem Außenlamellenträger 18 kann ein Sprengring 30 verwendet werden. Der Außenlamellenträger 28 ist dabei der Eingangslamellenträger der Kupplung K2, die als Lamellenkupplung ausgebildet ist und eine der beiden Lastschaltkupplungen der Doppelkupplungsgetriebeanordnung 4 darstellt. Ist die Trennkupplung K0 geschlossen, wird das Drehmoment über den Außenlamellenträger 16, den Außenlamellenträger 28 und das Lamellenpaket 32 der Kupplung K2 zum Innenlamellenträger 34 und von dort zur radial inneren Getriebeeingangswelle 36 übertragen.

Zum Verbinden der Außenlamellenträger 16 und 28 kann der Tilger 20 vom Außenlamellenträger 16 abmontiert werden, wodurch die Übergangsstelle freiliegt.

Zum Betätigen weist die Kupplung K2 den Kolben 38 auf. Der Kolben 38 hat in Umfangsrichtung verteilt mehrere Öffnungen 40 in Form von Langlöchern, in die der Außenlamellenträger 28 eingreifen kann. Genauer gesagt greifen mehrere Finger 42 des Außenlamellenträgers 28 in die Öffnungen 40 des Kolbens 38 ein. So bleibt der Kolben 38 gegenüber dem Außenlamellenträger 28 axial verschiebbar.

Radial innerhalb der Kupplung K2 befindet sich die Kupplung K1, die als Anfahrkupplung ausgestaltet ist. Der Außenlamellenträger 28 ist mit dem Außenlamellenträger 44 der Kupplung K1 drehfest verbunden. Insbesondere können die Außenlamellenträger 28 und 44 verschweißt sein. So kann das Drehmoment, das von der ersten Antriebseinheit 2 übertragen wird, auch zur Kupplung K1 gelangen. Der Außenlamellenträger 44 ist dementsprechend der Eingangslamellenträger der Kupplung K1. Über das Lamellenpaket 46 kann das Drehmoment zur radial äußeren Getriebeeingangswelle 37 gelangen.

Die Öffnungen 40 zur Aufnahme der Finger 42 sind bevorzugt am radial äußeren Rand, auch Topfrand bezeichenbar, des Kolbens 38 angeordnet. Der Kolben 38 hat eine Topfform. Am äußeren Rand des Bodens können die Finger 42 des Außenlamellenträgers 28 eingeführt werden, weswegen sich dort bevorzugt die Öffnungen 40 befinden.

Am Außenlamellenträger 28 kann ein Kettenrad 50 befestigt sein. Das Kettenrad 50 kann beispielsweise am Außenlamellenträger 28 angeschweißt sein. Dieses steht im Eingriff mit einer Kette 52, die den Elektromotor 3 und die Kupplungsanordnung 8 verbindet. Der Elektromotor 3 greift dabei auf der Eingangsseite beider Kupplungen K1 und K2 an, da der Ausganglamellenträger 28 einerseits der Eingangslamellenträger der Kupplung K2 ist und andererseits mit dem Außenlamellenträger 44 der Kupplung K1 drehfest verbunden ist, wobei der Außenlamellenträger 44 der Kupplung K1 ebenfalls der Eingangslamellenträger ist. Dementsprechend zeigt Figur 2 eine P2-Anordnung in Bezug auf die Ankupplung des Elektromotors 3.

Durch die Ausgestaltung und die Verbindung der Außenlamellenträger 16, 28 und 44 bilden diese das Gehäuse der Kupplungsanordnung 8. Die Kupplungsanordnung 8 ist eine Mehrfachkupplungsanordnung, und insbesondere eine Dreifachkupplungsanordnung. Außer den Außenlamellenträgern 16, 28 und 44 gibt es keine weiteren Gehäuseteile. Hierdurch ergibt sich ein bauraumoptimierter Aufbau.

Da der Tilger 20 lösbar mit dem Außenlamellenträger 16 verbunden ist kann die Verbindung der Außenlamellenträger 16 und 28 erfolgen, bevor der Tilger 20 mit der Kupplungsanordnung 8 verbunden wird.

Der beschriebene Aufbau mit den Außenlamellenträgern als Gehäuse erlaubt auch eine vereinfachte Lagerung der Kupplungsanordnung 8. Insbesondere kann die Kupplungsanordnung 8 motorseitig eine einzige radiale Lagerstelle 54 aufweisen. Das Lager 56 kann dabei als Radialkugellager ausgebildet sein. Es kann dabei bevorzugt ein Axial- und Radiallager sein. Es jedoch motorseitig das einzige Lager mit einer radialen Lagerfunktion.

Weiterhin weist die Kupplungsanordnung 8 motorseitig und getriebeseitig jeweils zwei Axiallager 58 auf. Die Axiallager 58 dienen der axialen Lagerung der Innenlamellenträger 12, 34 und 48. Sie sind dementsprechend an den Füßen der Innenlamellenträger 12, 34 und 48 angeordnet. Auf der Getriebeseite weist die Kupplungsanordnung 8 zur radialen Lagerung zwei Nadellager 60 auf, die die Nabe 62 lagern. Die Nabe 62 ist als Ölzuführnabe ausgebildet. Sie umfasst dementsprechend Ölkanäle und Dichtungen. Die Nabe 62 ist drehfest mit dem Außenlamellenträger 44 verbunden. Jedoch erfolgt der Drehmomentfluss nicht wie bei bekannten Doppelkupplungsanordnungen über die Nabe auf die Außenlamellenträger, vielmehr kommt das Drehmoment von den Außenlamellenträger, genauer gesagt vom Außenlamellenträger 28 über den Außenlamellenträger 44 zur Nabe 62.

Der Kolben 63 der Kupplung K1 stützt sich ebenfalls auf der Nabe 62 ab. Auch der Dichtungsträger 64 zum Abdichten des Druckraums der Kupplung K2 ist an der Nabe 62 angeordnet.

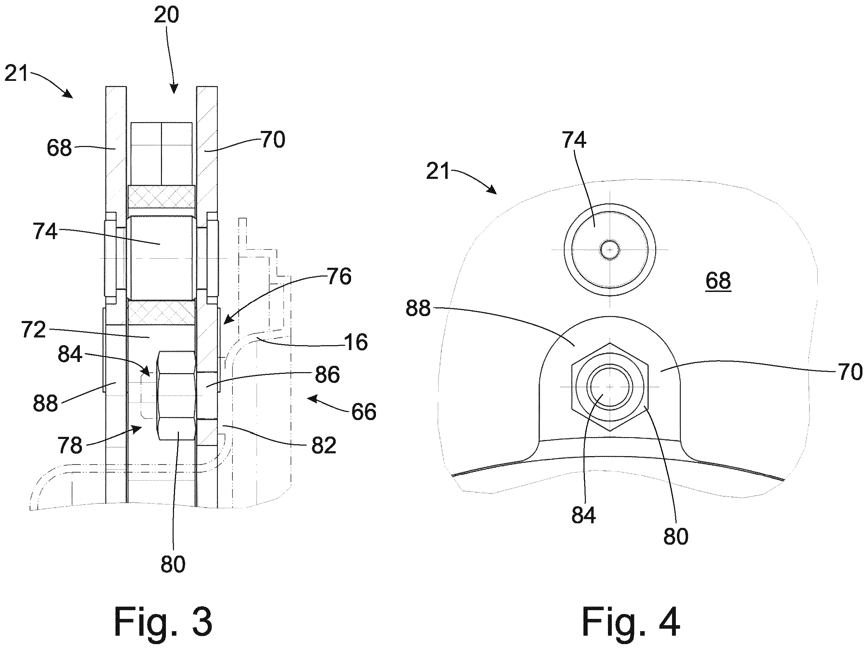

Figur 3 zeigt eine Tilgeranordnung 21 in einer ersten Ausgestaltung im Querschnitt. Das Antriebsstrangelement 66 ist dabei der Außenlamellenträger 16. Der Tilger 20 weist neben den Tilgerträgern 68 und 70 auch Tilgermassen 72 auf. Die Tilgermassen 72 werden auch Fliehgewichte genannt. Die Tilgerträger 68 und 70 sind über Abstandsstücke 74 miteinander vernietet. Um eine Überbestimmung der Tilgeranordnung 21 zu verhindern ist vorgesehen, dass einer der Tilgerträger 68 oder 70 freigestellt ist. Bei der Ausgestaltung nach Figur 3 ist nur der Tilgerträger 70 mit dem Außenlamellenträger 16 über eine Schraubverbindung 76 und damit lösbar am Außenlamellenträger 16 festgelegt. Die Schraubverbindung 76 besteht dabei aus der Schraube 78, der Mutter 80, dem Tilgerträger 70 und dem Außenlamellenträger 16. Der Schraubenkopf 82 ist mit dem Außenlamellenträger 16 vernietet oder bevorzugt verschweißt, also bevorzugt unlösbar am Außenlamellenträger 16 befestigt. Das Gewinde 84 der Schraube 78 greift dabei durch eine Durchgangsausnehmung 86 des Tilgerträgers 70. Bei dieser Ausgestaltung ist der nicht festgelegte Tilgerträger der Tilgerträger 68. Dieser ist freigestellt um einen Zugriff eines Werkzeugs auf die Mutter 80 zu ermöglichen. Die Freistellung erfolgt durch eine Durchgangsausnehmung 88. In Figur 3 sowie in den folgenden Ausgestaltungen der Tilgeranordnung 21 wird der Tilgerträger auf der Seite des Antriebsstrangelementes 66 mit den Bezugszeichen 70 versehen und der abgewandt vom Antriebsstrang 66 gelegene Tilgerträger mit Bezugszeichen 68. Dies ist unabhängig davon, ob der Tilgerträger eine Freistellung aufweist oder nicht.

Die Tilgerträger 68 und 70 sind seitlich angeordnet. Die Tilgermassen 72 bzw. Fliehgewichte befinden sich in ihrer Mitte. Diese Anordnung ist bevorzugt und unabhängig von anderen Merkmalen des Ausführungsbeispiels.

Figur 4 zeigt die Ausgestaltung der Tilgeranordnung 21 in der Draufsicht, und zwar vom Tilgerträger 68 aus. Dabei ist die Durchgangsausnehmung 88 als torförmige Ausnehmung im Tilgerträger 68 erkennbar. Die Schraube 78 ist von der Gewindeseite her erkennbar, auch die Mutter 80 ist im Querschnitt erkennbar.

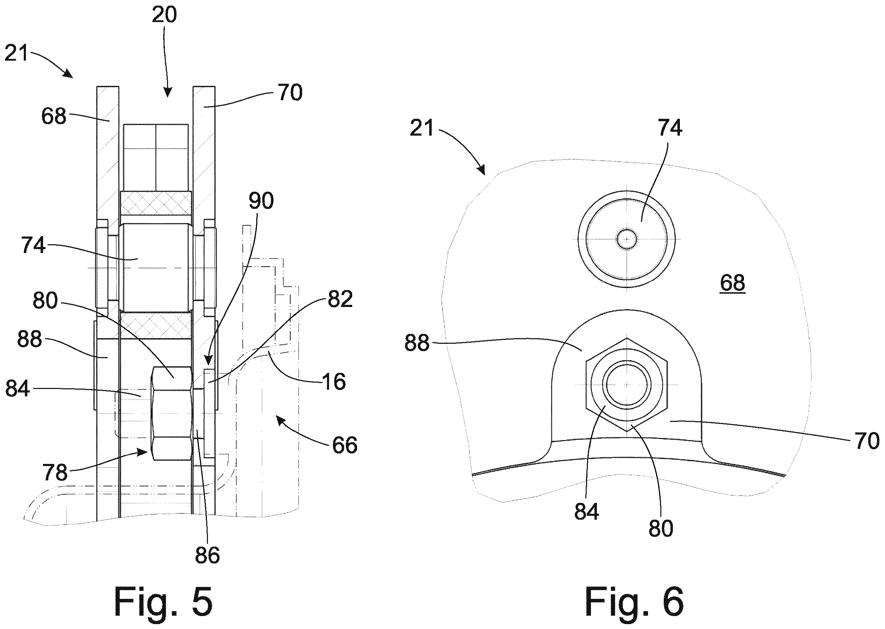

Figur 5 zeigt eine weitere Ausgestaltung der Tilgeranordnung 21. Gleiche Bezugszeichen bezeichnen dabei gleichartige Bauteile. Der Unterschied zwischen Figur 3 und Figur 5 besteht lediglich darin, dass der Tilgerträger 70 auf Höhe der Schraubverbindung 78 zusätzlich zur Durchgangsausnehmung 86 eine Einprägung 90 aufweist. Dadurch kann der Schraubenkopf 82 teilweise oder ganz in den Tilgerträger 70 aufgenommen werden. Auch bei dieser Ausgestaltung ist der festgelegte Tilgerträger der Tilgerträger 70 und damit der Tilgerträger auf der Seite des Antriebsstrangelementes 66.

Figur 6 zeigt die Tilgeranordnung 21 nach Figur 5 in der Draufsicht. Die Draufsicht ist von der Seite des Tilgerträgers 68 her. Dabei sind aus dieser Sicht keinerlei Unterschiede im Vergleich zu Figur 4 erkennbar.

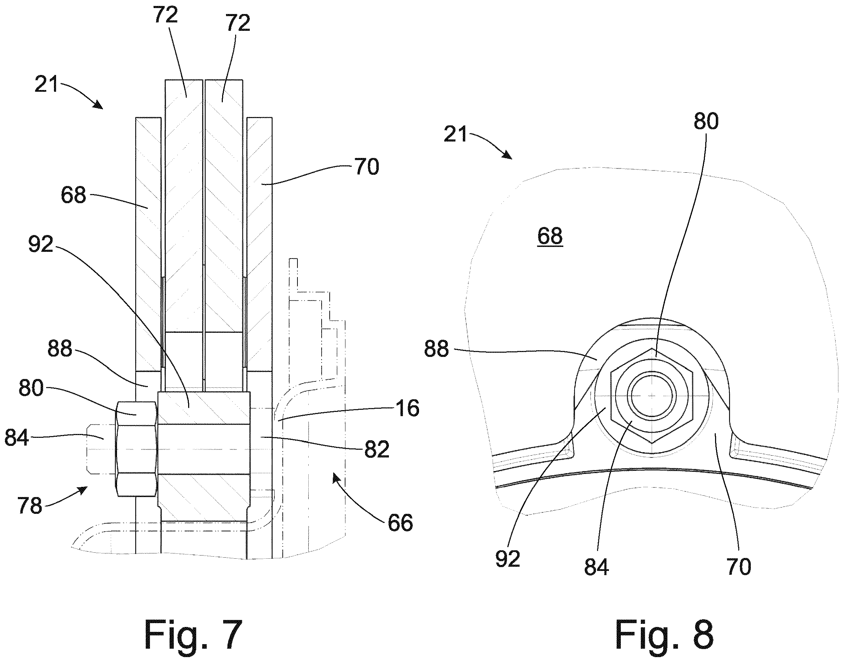

Figur 7 zeigt eine dritte Ausgestaltung der Tilgeranordnung 21. Auch bei dieser Ausgestaltung ist der festgelegte Tilgerträger der Tilgerträger 70. Bei dieser Ausgestaltung wird die Mutter 80 zugänglicher gemacht, indem zwischen dem Schraubkopf 82 und der Mutter 80 ein Abstandsring 92 eingefügt wird. Die Festlegung des Tilgerträgers 68 erfolgt dabei über den Abstandsring 92. Die Tilgermassen 72 befinden sich in der Mitte der Tilgerträger 68 und 70.

Figur 8 zeigt die Ausgestaltung der Tilgeranordnung 21 nach Figur 7 in der Draufsicht. Dabei ist als weiteres Bauteil der Abstandsring 92 erkennbar.

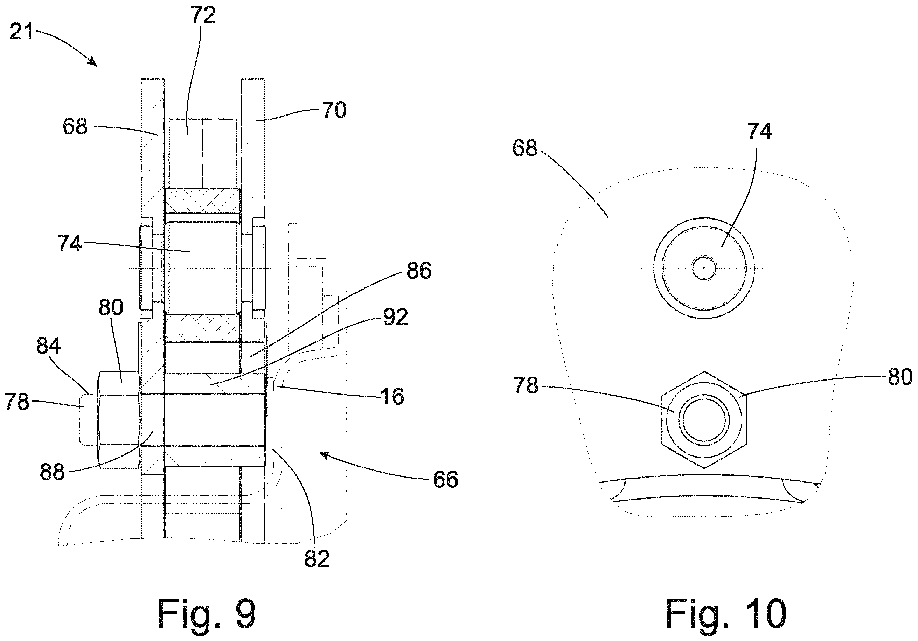

Figur 9 zeigt eine vierte Ausgestaltung der Tilgeranordnung 21. Auch bei dieser Ausgestaltung ist die Mutter 80 unter Zuhilfenahme eines Abstandringes 92 nach weiter außen verlagerbar. Im Unterschied zu Figur 7 ist allerdings der Tilgerträger 68 und damit der vom Antriebsstrangelement 66 beabstandete Tilgerträger festgelegt.

Dementsprechend ist die Durchgangsausnehmung 88 eine Durchgangsausnehmung zur Aufnahme des Gewindeteils der Schraube 78, während der Durchgangsausnehmung 86 als Freistellung ausgebildet ist. Der Unterschied ist, dass über die Durchgangsausnehmung 86 bei dieser Ausgestaltung keine Festlegung des Tilgerträgers 70 am Antriebsstrangelement 66 erfolgt. Dementsprechend liegt der Abstandsring 92 auch auf der Seite des Antriebsstrangelementes 66 nicht am Tilgerträger 70 sondern am Schraubenkopf 82 oder alternativ am Außenlamellenträger 16 als Antriebsstrangelement 66 an. Kontakt besteht dagegen mit dem Tilgerträger 68, der auf der abgewandten Seite des Antriebsstrangelementes 66 liegt.

Dementsprechend ist in Figur 10, die eine Draufsicht auf die Ausgestaltung der Tilgeranordnung 21 nach Figur 9 zeigt, lediglich die Mutter 80 und die Schraube 78 erkennbar. Diese verdecken die Durchgangsausnehmung 88, da diese nicht als Freistellung ausgebildet ist.

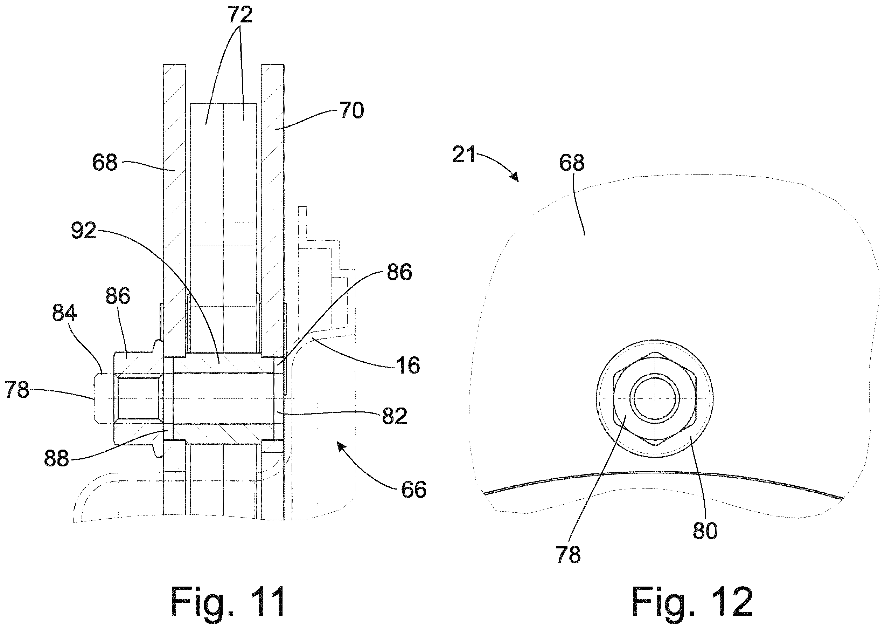

Die Figur 11 zeigt die Ausgestaltung der Tilgeranordnung 21 nach Figur 9 in einer Abwandlung. Dabei werden die Tilgermassen 72 über den Abstandsring 92 getragen. Auch ist die Mutter 80 von der Formgebung her abgewandelt, sie ist auf der Seite des Tilgerträgers 68 mit einem Kragen versehen.

Figur 12 zeigt die Tilgeranordnung ach Figur 11 in der Draufsicht. Da wie bereits zu Figur 9 beschrieben die Freistellung auf der Seite des Tilgerträgers 70 vorliegt, bedeckt die Mutter 80 die Durchgangsausnehmung 88 vollständig.

### Bezugszeichen

- 1: Kraftfahrzeug
- 2: erste Antriebseinheit
- 3: zweite Antriebseinheit
- 4: Doppelkupplungsgetriebeanordnung
- 5: Differential
- 6: Linie
- 7: Linie
- 8: Kupplungsanordnung
- 9: Torsionsdämpfer
- 10: Nabe
- 12: Innenlamellenträger
- 14: Lamellenpaket
- 16: Außenlamellenträger
- 18: Kolben
- 21: Tilgeranordnung
- 20: drehzahladaptiver Tilger
- 22: Schraube
- 24: Schraubenkopf
- 26: Mutter
- 27: Hülse
- 28: Außenlamellenträger
- 30: Sprengring
- 32: Lamellenpaket
- 34: Innenlamellenträger
- 36: Getriebeeingangswelle
- 37: Getriebeeingangswelle
- 38: Kolben
- 40: Öffnung
- 42: Finger
- 44: Außenlamellenträger
- 46: Lamellenpaket
- 48: Innenlamellenträger
- 50: Kettenrad
- 52: Kette
- 54: Lagerstelle
- 56: Lager
- 58: Axiallager
- 60: Nadellager
- 62: Nabe
- 63: Kolben
- 64: Dichtungsträger
- 66: Antriebsstrangelement
- 68: Tilgerträger
- 70: Tilgerträger
- 72: Tilgermasse
- 74: Abstandsstück
- 76: Schraubverbindung
- 78: Schraube
- 80: Mutter
- 82: Schraubenkopf
- 84: Gewinde
- 86: Durchgangsausnehmung
- 88: Durchgangsausnehmung
- 90: Prägung
- 92: Abstandsring

- K0: Trennkupplung
- K1: Kupplung
- K2: Kupplung

## Patentansprüche

1. Tilgeranordnung für einen Kraftfahrzeugantriebsstrang mit einem Tilger (20) und einem Antriebsstrangelement (16, 66), wobei der Tilger (20) wenigstens zwei Tilgerträger (68, 70) aufweist und wobei der Tilger (20) an dem Antriebsstrangelement (16, 66) befestigt ist, und wobei genau ein Tilgerträger (68, 70) des Tilgers (20) an dem Antriebsstrangelement (16, 66) festgelegt ist, wobei genau ein Tilgerträger (68, 70) mit dem Antriebsstrangelement (16, 66) verschraubt ist, **dadurch gekennzeichnet, dass** der Schraubkopf (82) der Schraube (78) der Schraubverbindung (76) mit der Oberseite an dem Antriebsstrangelement (16, 66) verschweisst ist.

2. Tilgeranordnung für einen Kraftfahrzeugantriebsstrang mit einem Tilger (20) und einem Antriebsstrangelement (16, 66), wobei der Tilger (20) wenigstens zwei Tilgerträger (68, 70) aufweist und wobei der Tilger (20) an dem Antriebsstrangelement (16, 66) befestigt ist, und wobei genau ein Tilgerträger (68, 70) des Tilgers (20) an dem Antriebsstrangelement (16, 66) festgelegt ist, wobei genau ein Tilgerträger (68, 70) mit dem Antriebsstrangelement (16, 66) verschraubt ist, **dadurch gekennzeichnet, dass** der Schraubkopf (82) der Schraube (78) der Schraubverbindung (76) mit der Oberseite an dem Antriebsstrangelement (16, 66) vernietet ist.

3. Tilgeranordnung nach Anspruch 1 oder 2, **dadurch gekennzeichnet, dass** wenigstens einer der Tilgerträger (68, 70) in radialer Richtung auf Höhe der einer Befestigungsstelle freigestellt ist.

4. Tilgeranordnung nach Anspruch 3, **dadurch gekennzeichnet, dass** genau ein Tilgerträger (68, 70) freigestellt ist.

5. Tilgeranordnung nach einem der vorangehenden Ansprüche, **dadurch gekennzeichnet, dass** der Tilger (20) an dem Antriebsstrangelement (16, 66) lösbar befestigt ist.

6. Tilgeranordnung nach einem der vorangegangenen Ansprüche, **dadurch gekennzeichnet, dass** der Schraubkopf (82) der Schraube (78) der Schraubverbindung (76) mit der Oberseite an dem Antriebsstrangelement (16, 66) befestigt ist.

7. Tilgeranordnung nach einem der vorangehenden Ansprüche, **dadurch gekennzeichnet, dass** das Antriebsstrangelement (16, 66) als Gehäuse ausgebildet ist.

8. Tilgeranordnung nach einem der vorangehenden Ansprüche, **dadurch gekennzeichnet, dass** das Antriebsstrangelement (66) als Lamellenträger, insbesondere Außenlamellenträger (16), einer Lamellenkupplungsanordnung (4) ausgebildet ist.

9. Tilgeranordnung nach Anspruch 8, **dadurch gekennzeichnet, dass** die Lamellenkupplungsanordnung als Dreifachkupplungsanordnung (8) ausgebildet ist.

10. Tilgeranordnung nach einem der vorangehenden Ansprüche, **dadurch gekennzeichnet, dass** zwischen den Tilgerträgern ein Abstandselement (92) die Schraube (78), umgreift.

11. Tilgeranordnung nach einem der vorangehenden Ansprüche, **dadurch gekennzeichnet, dass** der Tilger (20) als Tilger (20) mit seitlichen Tilgerträgern (68, 70) ausgebildet ist.

12. Hybrid-Doppelkupplungsgetriebeanodnung (4) mit einer Tilgeranordnung (21), **dadurch gekennzeichnet, dass** die Tilgeranordnung (21) nach einem der vorangehenden Ansprüche ausgebildet ist.

13. Kraftfahrzeug mit einer Tilgeranordnung (8) und/oder einer Doppelkupplungsgetriebeanordnung (4), **dadurch gekennzeichnet, dass** die Tilgeranordnung (21) nach einem der Ansprüche 1 bis 11 und/oder die Hybid-Doppelkupplungsgetriebeanordnung (4) nach Anspruch 12 ausgebildet ist.

## Claims

1. Vibration absorber assembly for a motor vehicle powertrain, having a vibration absorber (20) and a powertrain element (16, 66), wherein the vibration absorber (20) has at least two vibration absorber supports (68, 70), and wherein the vibration absorber (20) is fastened to the powertrain element (16, 66), and wherein exactly one vibration absorber support (68, 70) of the vibration absorber (20) is fixedly established on the powertrain element (16, 66), wherein exactly one vibration absorber support (68, 70) is screwed to the powertrain element (16, 66), **characterized in that** the screw head (82) of the screw (78) of the threaded connection (76) is welded to the powertrain element (16, 66) by way of the upper side.

2. Vibration absorber assembly for a motor vehicle powertrain, having a vibration absorber (20) and a powertrain element (16, 66), wherein the vibration absorber (20) has at least two vibration absorber supports (68, 70), and wherein the vibration absorber (20) is fastened to the powertrain element (16, 66), and wherein exactly one vibration absorber support (68, 70) of the vibration absorber (20) is fixedly established on the powertrain element (16, 66), wherein exactly one vibration absorber support (68, 70) is screwed to the powertrain element (16, 66), **characterized in that** the screw head (82) of the screw (78) of the threaded connection (76) is riveted to the powertrain element (16, 66) by way of the upper side.

3. Vibration absorber assembly according to Claim 1 or 2, **characterized in that** at least one of the vibration absorber supports (68, 70) is unconstrained in the radial direction at the height level of the fastening location.

4. Vibration absorber assembly according to Claim 3, **characterized in that** exactly one vibration absorber support (68, 70) is unconstrained.

5. Vibration absorber assembly according to one of the preceding claims, **characterized in that** the vibration absorber (20) is releasably fastened to the powertrain element (16, 66).

6. Vibration absorber assembly according to one of the preceding claims, **characterized in that** the screw head (82) of the screw (78) of the threaded connection (76) is fastened to the powertrain element (16, 66) by way of the upper side.

7. Vibration absorber assembly according to one of the preceding claims, **characterized in that** the powertrain element (16, 66) is configured as a housing.

8. Vibration absorber assembly according to one of the preceding claims, **characterized in that** the powertrain element (66) is configured as a plate carrier, in particular an outer plate carrier (16), of a multi-plate clutch assembly (4).

9. Vibration absorber assembly according to Claim 8, **characterized in that** the multi-plate clutch assembly is configured as a triple-clutch assembly (8) .

10. Vibration absorber assembly according to one of the preceding claims, **characterized in that** a spacer element (92) encompasses the screw (78) between the vibration absorber supports.

11. Vibration absorber assembly according to one of the preceding claims, **characterized in that** the vibration absorber (20) is configured as a vibration absorber (20) having lateral vibration absorber supports (68, 70).

12. Hybrid double-clutch transmission assembly (4) having a vibration absorber assembly (21), **characterized in that** the vibration absorber assembly (21) is configured according to one of the preceding claims.

13. Motor vehicle having a vibration absorber assembly (21) and/or a double-clutch transmission assembly (4), **characterized in that** the vibration absorber assembly (21) is configured according to one of Claims 1 to 11, and/or the hybrid double-clutch transmission assembly (4) is configured according to Claim 12.

## Revendications

1. Ensemble formant absorbeur destiné à une chaîne cinématique de véhicule automobile et comprenant un absorbeur (20) et un élément de chaîne cinématique (16, 66), l'absorbeur (20) comportant au moins deux supports d'absorbeur (68, 70) et l'absorbeur (20) étant fixé à l'élément de chaîne cinématique (16, 66), et exactement un support (68, 70) de l'absorbeur (20) étant monté sur l'élément de chaîne cinématique (16, 66), exactement un support d'absorbeur (68, 70) étant vissé sur l'élément de chaîne cinématique (16, 66),
**caractérisé en ce que** la tête de vis (82) de la vis (78) de la liaison vissée (76) est soudée au sommet de l'élément de chaîne cinématique (16, 66).

2. Ensemble formant absorbeur destiné à une chaîne cinématique de véhicule automobile et comprenant un absorbeur (20) et un élément de chaîne cinématique (16, 66), l'absorbeur (20) comportant au moins deux supports d'absorbeur (68, 70) et l'absorbeur (20) étant fixé à l'élément de chaîne cinématique (16, 66), et exactement un support (68, 70) de l'absorbeur (20) étant monté sur l'élément de chaîne cinématique (16, 66), exactement un support d'absorbeur (68, 70) étant vissé sur l'élément de chaîne cinématique (16, 66),
**caractérisé en ce que** la tête de vis (82) de la vis (78) de la liaison vissée (76) est riveté par le côté supérieur à l'élément de chaîne cinématique (16, 66).

3. Ensemble formant absorbeur selon la revendication 1 ou 2, **caractérisé en ce qu'**au moins un des supports d'absorbeurs (68, 70) est libéré dans une direction radiale au niveau du point de fixation.

4. Dispositif absorbeur selon la revendication 3, **caractérisé en ce qu'**exactement un support d'absorbeur (68, 70) est libéré.

5. Ensemble formant absorbeur selon l'une des revendications précédentes, **caractérisé en ce que** l'absorbeur (20) est fixé de manière amovible à l'élément de chaîne cinématique (16, 66).

6. Ensemble formant absorbeur selon l'une des revendications précédentes, **caractérisé en ce que** la tête de vis (82) de la vis (78) de la liaison vissée (76) est fixée par le côté supérieur à l'élément de chaîne cinématique (16, 66).

7. Ensemble formant absorbeur selon l'une des revendications précédentes, **caractérisé en ce que** l'élément de chaîne cinématique (16, 66) est réalisé sous la forme d'un boîtier.

8. Ensemble formant absorbeur selon l'une des revendications précédentes, **caractérisé en ce que** l'élément de chaîne cinématique (66) est réalisé sous la forme d'un support à disques, en particulier sous la forme d'un support à disques extérieurs (16), d'un ensemble formant embrayage à disques (4).

9. Ensemble formant absorbeur selon la revendication 8, **caractérisé en ce que** l'ensemble formant embrayage à disques est conçu comme un ensemble formant embrayage triple (8).

10. Ensemble formant absorbeur selon l'une des revendications précédentes, **caractérisé en ce qu'**un élément d'écartement (92) s'engage autour de la vis (78) entre les supports d'absorbeur.

11. Ensemble formant absorbeur selon l'une des revendications précédentes, **caractérisé en ce que** l'absorbeur (20) est réalisé sous la forme d'un absorbeur (20) pourvu de supports d'absorbeur latéraux (68, 70).

12. Ensemble formant chaîne cinématique hybride à double embrayage (4) comprenant un ensemble formant absorbeur (21), **caractérisé en ce que** l'ensemble formant absorbeur (21) est conçu selon l'une des revendications précédentes.

13. Véhicule automobile comprenant un ensemble formant absorbeur (21) et/ou un ensemble formant chaîne cinématique à double embrayage (4), **caractérisé en ce que** l'ensemble formant absorbeur (21) est conçu selon l'une des revendications 1 à 11 et/ou l'ensemble formant chaîne cinématique hybride à double embrayage (4) selon la revendication 12.
